# EUROPÄISCHE PATENTANMELDUNG

(11) **EP 3 546 352 A1**
(43) Veröffentlichungstag der Anmeldung: **02.10.2019**
(21) Anmeldenummer: 19158797.1
(22) Anmeldetag: 22.02.2019
(51) Int. Cl.: B64C 27/14, B64D 35/02, B64D 35/08

(54) **FLUGGERÄT**

(30) Priorität: 29.03.2018 DE 102018107586
(71) Anmelder: RIEDEL Communications International GmbH, 42109 Wuppertal (DE)
(72) Erfinder: Riedel, Thomas, 42109 Wuppertal (DE)
(74) Vertreter: Roche, von Westernhagen & Ehresmann

(57) **Zusammenfassung**

Die Erfindung betrifft unter anderem ein Fluggerät (10), umfassend wenigstens einen Auftriebskräfte generierenden Rotor (12, 12a, 12b), der unter Zuhilfenahme einer Steuerung (18) von einem Antrieb (16, 16a, 16b) ansprechbar ist, wobei der Antrieb (16, 16a, 16b) eine elektromotorisch angetriebene Rotorantriebswelle (29) aufweist. Die Besonderheit der Erfindung besteht unter anderem darin, dass der Antrieb (16, 16a, 16b) eine Mehrzahl von Elektromotoren (25, 26, 27) aufweist, die die Rotorantriebswelle (29) gemeinsam antreiben.

## Beschreibung

Die Erfindung betrifft zunächst ein Fluggerät nach dem Oberbegriff des Anspruches 1.

Derartige Fluggeräte sind beispielsweise unter der Bezeichnung Drohne, Multicopter oder Helikopter bekannt, und vielfältig im Einsatz. Entsprechende Fluggeräte werden von der Anmelderin umfangreich eingesetzt und entwickelt. Zum Stand der Technik wird verwiesen auf die nachveröffentlichten Patentanmeldungen DE 10 2018 101 556 A1 und DE 10 2017 105 956 sowie EP 18161486 die sämtlich auf die Anmelderin zurückgehen.

Derartige Fluggeräte können über einen oder mehrere Rotoren verfügen. Bei Mulitcoptern sind mehrere Rotoren vorgesehen, die Auftriebskräfte generieren. Bei Helikoptern ist in der Regel ein Auftriebskräfte generierender Rotor vorgesehen, oder ein Doppelrotor, wobei zusätzlich noch ein Seitenruder oder Steuerruder in Form eines weiteren kleineren Rotors vorgesehen sein kann, der in der Regel aber keine oder nur vernachlässigbare Auftriebskräfte generiert.

Der Rotor ist von einem Antrieb ansprechbar, wobei dies unter Zuhilfenahme einer Steuerung geschieht, die dem Fluggerät zugeordnet ist, insbesondere Bestandteil des Fluggerätes ist. Die Steuerung kann beispielsweise die Drehzahl und/oder die Leistung des Antriebs steuern, um eine entsprechende Änderung der Flugposition eines Fluggerätes zu veranlassen.

Der Rotor wird unter Zwischenschaltung einer Rotorantriebswelle unmittelbar oder mittelbar angetrieben. Die Rotorantriebswelle wird bei einem Fluggerät des Standes der Technik gemäß dem Oberbegriff des Anspruches 1 durch einen Elektromotor angetrieben.

Ausgehend von einem Fluggerät mit den Merkmalen des Oberbegriffes des Anspruches 1 liegt der Erfindung die Aufgabe zugrunde, dieses derartig weiter zu entwickeln, dass das Fluggerät auch im Dauereinsatz einsetzbar ist, und/oder eine höhere Lebensdauer aufweist.

Die Erfindung löst diese Aufgabe mit den Merkmalen des Anspruches 1, insbesondere mit denen des Kennzeichenteils, und ist demgemäß dadurch gekennzeichnet, dass der Antrieb eine Mehrzahl von Elektromotoren aufweist, die die Rotorantriebswelle gemeinsam antreiben.

Das Prinzip der Erfindung besteht darin, einen Rotor nicht - wie beim Stand der Technik - mit nur einem Elektromotor anzutreiben, sondern stattdessen eine Mehrzahl von Elektromotoren vorzusehen. Diese treiben die Rotorantriebswelle gemeinsam an. Insbesondere wirken diese mit dem Umfang, insbesondere dem Außenumfang oder dem Innenumfang, der Rotorantriebswelle zusammen, die hierzu beispielsweise eine Verzahnung aufweisen kann. Den Elektromotoren kann jeweils ein Ritzel zugeordnet sein, das mit dieser Verzahnung wechselwirkt. Entlang des Umfanges der Rotorantriebswelle können auf diese Weise mehrere Wirkbereiche angeordnet sein, an denen eine Kraftübertragung bzw. genau genommen eine Übertragung von Drehmomenten, von den einzelnen Ritzeln des jeweiligen Elektromotors, auf die Rotorantriebswelle durchgeführt werden kann.

Dabei kann beispielsweise vorgesehen sein, dass die Rotorantriebswelle nach Art eines Sonnenrades einer Planetengetriebeanordnung ausgestaltet ist, und die mehreren Elektromotoren jeweils über Ritzel mit der Rotorantriebswelle zusammenwirken, wobei die Ritzel nach Art von Planeten einer Planetengetriebeanordnung angeordnet sind und mit dem Sonnenrad zusammenwirken. Die Besonderheit besteht allerdings darin, dass die Ritzel der Elektromotoren zwar drehbar, aber ortsfest in der Planetengetriebeanordnung angeordnet sind. Weiter vorteilhaft sind diese Ritzel der mehreren Elektromotoren äquidistant, entlang des Umfangs der Rotorantriebswelle, oder um eine Drehachse der Rotorantriebswelle herum angeordnet.

Die beim Stand der Technik erforderliche Antriebsleistung des Rotors, die von nur einem einzigen Elektromotor aufzubringen war, wird erfindungsgemäß auf mehrere Elektromotoren aufgeteilt. Dies ermöglicht zum einen eine redundante Ausbildung des Antriebs. Fällt beispielsweise ein Elektromotor aus, oder wird eine Störung oder ein Verschleiß festgestellt, können die anderen, verbleibenden Elektromotoren die Aufgaben des ausgefallenen Elektromotors übernehmen.

Andererseits kann bei Bedarf auch eine höhere Rotorantriebsleistung erreicht werden, da sich die Leistungen der mehreren Elektromotoren addiert.

Schließlich wird insbesondere auch eine höhere Lebensdauer oder Langlebigkeit des Fluggerätes erreicht, da die einzelnen Elektromotoren nicht so stark belastet werden.

Auch Dauereinsätze von Fluggeräten, beispielsweise im Sinne eines Einsatzes als fliegender Mast eines Funknetzes oder im Sinne einer Blitzschutzeinrichtung, wie in den eingangs beschriebenen, nachveröffentlichten Patentanmeldungen der Anmelderin beschrieben, werden verbessert.

Schließlich hat die Erfindung festgestellt, dass der Hauptgrund für die Alterung eines Elektromotors in einer übermäßigen Erwärmung der Bauteile und einer hohen Belastung der mechanischen Lager zu sehen ist. Dabei erkennt die Erfindung weiter, dass bei großen, leistungsstarken Elektromotoren die Kühlung der Bauteile mit zunehmender Motorenleistung aufwendiger wird, da das magnetisch aktive Volumen stark zunimmt, aber die zu Kühlzwecken einsetzbare Oberfläche nicht in diesem Maße zunimmt. Auch entsteht beim Stand der Technik eine hohe Belastung der Drehlager in den Motoren, insbesondere aufgrund der vorhandenen Biegemomente, die auf die Motorwelle einwirken.

Dadurch, dass gemäß der Erfindung eine Aufteilung eines Elektromotors in mehrere kleine Elektromotoren vorgenommen wird, kann eine verbesserte Kühlung der einzelnen Elektromotoren erreicht werden, da bei gleicher Antriebsleistung im Verhältnis eine größere, zu Kühlzwecken zur Verfügung stehende Oberfläche erreicht wird.

Planetengetriebeanordnungen sind zwar in der Getriebelehre grundsätzlich bekannt. Hier dienen die umlaufenden, um ein Sonnenrad herum angeordneten Planetenräder aber in der Regel nur der Über- oder Untersetzung des Antriebs, also der Drehzahländerung, und sind insbesondere nicht ortsfest angeordnet.

Gemäß der Erfindung wird die Möglichkeit bereitgestellt, die mehreren Elektromotoren, insbesondere deren jeweilige Ritzel, äquidistant um eine Drehachse der Rotorantriebswelle herum, anzuordnen, so dass eine symmetrische Abstützung der Rotorwelle erfolgen kann. Biegemomente, die von dem Rotor ausgeübt werden, werden daher symmetrisch über mehrere Elektromotoren gestützt über die Hohlwelle und das Sonnenrad übertragen, und von den Elektromotoren aufgefangen, so dass die entstehenden Biegemomente keine gravierenden Auswirkungen besitzen.

Durch die erfindungsgemäß erreichte kompakte und symmetrische Leistungsaufteilung kann eine höhere Lebensdauer des Fluggerätes erreicht werden. Zugleich kann das Fluggerät zu geringen Herstellkosten gefertigt werden.

Gemäß einer vorteilhaften Ausgestaltung der Erfindung ist die Rotorantriebswelle mittelbar oder unmittelbar mit dem Rotor verbunden. Vorteilhafterweise ist die Rotorantriebswelle als Hohlwelle ausgebildet, und dasjenige Element im Antriebsstrang, welches über mehrere Kraftübertragungsbereiche oder Drehmomentübertragungsbereiche oder Wirkbereiche mit der Mehrzahl der Elektromotoren verbunden ist. Die Rotorantriebswelle kann unmittelbar mit dem Rotor verbunden sein, oder unter Zwischenschaltung weiterer Drehmomente übertragender Elemente, ggf. auch unter Zwischenschaltung eines zwischen Rotorantriebswelle und Rotor angeordneten Getriebes, ggf. auch mit einer Drehzahl-Untersetzung oder -Übersetzung. Vorteilhafterweise ist die Rotorantriebswelle unmittelbar mit dem Rotor verbunden, so dass die Drehzahl der Rotorantriebswelle der Drehzahl des Rotors entspricht.

Gemäß einer weiteren vorteilhaften Ausgestaltung der Erfindung ist die Drehzahl der Rotorantriebswelle proportional zur Drehzahl des Rotors. In dieser Ausführungsform ist insoweit noch ein zusätzliches Getriebe vorgesehen.

Gemäß einer weiteren vorteilhaften Ausgestaltung der Erfindung ist die Drehachse der Rotorantriebswelle identisch mit der Drehachse des Rotors. Bei weiteren Ausführungsformen der Erfindung ist die Drehachse der Rotorantriebswelle achsparallel oder quer oder geneigt zu der Drehachse des Rotors ausgerichtet. Bei den zuletzt beschriebenen Erfindungsbeispielen sind insoweit noch weitere Drehmoment- oder Kraftübertragungselemente im Antriebsweg zwischen Rotorantriebswelle und Rotor vorgesehen.

Angemerkt sei an dieser Stelle, dass der Rotor nur eines oder alternativ mehrere Rotorblätter aufweisen kann.

Gemäß einer weiteren vorteilhaften Ausgestaltung der Erfindung ist die Rotorantriebswelle nach Art einer Hohlwelle ausgebildet. Die Hohlwelle bietet bei geringem Gewicht die Möglichkeit, auf ihrem Außenumfang oder Innenumfang mehrere unterschiedliche Kraft- oder Drehmomentübertragungsbereiche vorzusehen, an denen jeweils von einem Elektromotor der Mehrzahl von Elektromotoren eine Drehmomentübertragung auf die Hohlwelle erreicht wird. Beispielsweise kann die Rotorantriebswelle auf ihrem Außenumfang oder entlang ihres Innenumfangs mit einer Verzahnung versehen sein. Die Verzahnung kann beispielsweise mit einem Ritzel eines Elektromotors zusammenwirken. Vorteilhafterweise sind mehrere Ritzel der Mehrzahl der Elektromotoren entlang des Umfanges der Hohlwelle, weiter vorteilhafterweise um die Drehachse der Rotorantriebswelle herum, angeordnet. Weiter vorteilhafterweise sind mehrere Elektromotoren, insbesondere die Mehrzahl der Ritzel der Mehrzahl der Elektromotoren, in äquidistanter Anordnung um eine Drehachse der Rotorantriebswelle herum angeordnet, und greifen insoweit äquidistant an unterschiedlichen Kraft- bzw. Drehmomentübertragungsbereichen an der Rotorantriebswelle an. Hierdurch wird eine symmetrische Anordnung und eine entsprechend symmetrische Drehmomentübertragung erreicht.

Vorteilhafterweise dreht die Mehrzahl der Elektromotoren mit gleicher Drehzahl. Hierdurch kann eine gleichmäßige Beaufschlagung der Rotorantriebswelle erfolgen. Weiter vorteilhafterweise ist der Mehrzahl von Elektromotoren jeweils ein Ritzel zugeordnet, welches mit der Verzahnung kämmt. Hierdurch wird eine in konstruktiver Hinsicht besonders einfache Bauweise erreicht.

Gemäß einer weiteren vorteilhaften Ausgestaltung der Erfindung ist dem jeweiligen Ritzel eine Freilaufeinrichtung zugeordnet, die bei Ausfall eines Elektromotors einen Freilauf des Ritzels zulässt. Die Freilaufeinrichtung kann z. B. unmittelbar an dem Ritzel angeordnet sein, oder zwischen Ritzel und Elektromotor vorgesehen sein. Sie kann auch in konstruktiv alternativer Gestaltung entlang der kämmenden Verzahnung von Ritzel und Rotorantriebswelle vorgesehen sein, z. B. durch entsprechende Gestaltung der Zahnflanken von Zähnen der Ritzel und Zähnen der Rotationswelle. Die Freilaufeinrichtung sorgt dafür, dass bei Ausfall eines Elektromotors, z. B. bei Blockade der zugehörigen Elektromotor-Ausgangswelle, die Rotorantriebswelle von den verbleibenden Elektromotoren der Mehrzahl von Elektromotoren weiter angetrieben werden kann, ohne, dass durch den Ausfall des Elektromotors eine Blockade der Drehbewegung der Rotorantriebswelle erfolgt.

Gemäß einer weiteren vorteilhaften Ausgestaltung der Erfindung ist die Rotorantriebswelle nach Art eines drehenden Sonnenrades eines Planetengetriebes oder einer Planetengetriebeanordnung ausgebildet. Weiter vorteilhafterweise sind die Ritzel der Mehrzahl von Elektromotoren nach Art von ortsfest ausgebildeten Planeten des Planetengetriebes oder der Planetengetriebeanordnung angeordnet. Die Ritzel sind also planetenartig um das Sonnenrad herum angeordnet und treiben dieses gemeinsam an.

Sämtliche Ritzel sämtlicher Elektromotoren drehen dabei im gleichen Drehsinne, und dabei sämtlich gegenläufig zu dem Drehsinn der Rotorantriebswelle.

Gemäß einer weiteren vorteilhaften Ausgestaltung der Erfindung erhält das Fluggerät seine Betriebsspannung von einem an dem Fluggerät angeordneten Akku oder einer entsprechenden Batterie. Gemäß einer alternativen vorteilhaften Ausgestaltung der Erfindung ist das Fluggerät über ein Spannungsversorgungskabel während des Flugbetriebs mit einer Bodenstation verbunden. Bei dieser Ausführungsform erhält das Fluggerät seine Betriebsspannung von der Bodenstation.

Hierdurch kann das Fluggerät im Dauereinsatz, z. B. zur Bereitstellung eines Blitzschutzes für ein Veranstaltungsgelände oder zur Bereitstellung eines Funkmastes eines Funknetzwerkes, dauerhaft, insbesondere unter Bewahrung einer eingestellten Flugposition, eingesetzt werden.

Gemäß einer weiteren vorteilhaften Ausgestaltung der Erfindung umfasst die Steuerung eine Einrichtung, mit der das Fluggerät eine eingestellte Flugposition dauerhaft bewahren kann. Eine solche Einstellung der Flugposition kann beispielsweise drahtlos oder drahtgebunden, oder unter Zuhilfenahme einer im Bereich der Bodenstation angeordneten Steuerung, erfolgen. Ist eine Flugposition einmalig eingestellt, kann die Einrichtung dafür Sorge tragen, dass die eingestellte Flugposition dauerhaft bewahrt wird.

Gemäß einer weiteren vorteilhaften Ausgestaltung der Erfindung besitzen die Mehrzahl von Elektromotoren jeweils eine gleiche oder im wesentlichen gleiche Leistung. Die Leistungen der einzelnen Elektromotoren addieren sich gemäß der Erfindung zu einer Gesamtantriebsleistung für den Rotor.

Gemäß einer weiteren vorteilhaften Ausgestaltung der Erfindung tragen im Normalbetrieb des Fluggerätes die mehreren Elektromotoren zu gleichen oder im wesentlichen gleichen Leistungsanteilen zu der Gesamtantriebsleistung des Rotors bei. Hierdurch wird für eine gleichmäßige Auslastung und einen gleichmäßigen Verschleiß der Mehrzahl der Elektromotoren gesorgt.

Gemäß einer weiteren vorteilhaften Ausgestaltung der Erfindung weist das Fluggerät eine Einrichtung auf, mit der ein Ausfall oder eine Störung oder das Auftreten eines Verschleißes an einem oder an mehreren Elektromotoren detektierbar ist.

Gemäß einer weiteren vorteilhaften Ausgestaltung der Erfindung ist vorgesehen, dass eine Einrichtung den Ausfall oder die Störung oder den Verschleißanfall an die Steuerung meldet.

Die Einrichtung kann beispielsweise unter Zuhilfenahme von Sensoren, Detektoren oder Überwachungseinrichtungen eine ordnungsgemäße Funktion der Elektromotoren überwachen, und bei Auftreten einer Störung oder eines Ausfalls oder eines Verschleißanfalles diese Situation an die Steuerung des Fluggerätes, oder ggf. auch an eine Steuerung an der Bodenstation, melden.

Gemäß einer weiteren vorteilhaften Ausgestaltung der Erfindung spricht die Steuerung im Falle eines Ausfalls oder Störfalls oder eines Verschleißanfalles eines der Elektromotoren wenigstens einen anderen der Mehrzahl der Elektromotoren im Sinne eines teilweisen oder vollständigen Ausgleiches und/oder einer Übernahme der ausgefallenen Leistung an. Es besteht insoweit die Möglichkeit, dass bei Ausfall eines Elektromotors die übrigen verbleibenden Elektromotoren dessen Funktion übernehmen und dafür sorgen, dass das Fluggerät trotz des Ausfalls eines Elektromotors seinen Einsatz - zumindest noch für eine gewisse Zeit - fortsetzt, oder zumindest noch steuerbar oder lenkbar bleibt, um sicher zu dem Boden oder zu einem Ausgangspunkt des Fluges zurückzukehren.

Gemäß einer weiteren vorteilhaften Ausgestaltung der Erfindung weist das Fluggerät eines Bremseinrichtung auf. Diese kann insbesondere dazu vorgesehen sein, um bei Auftreten eines Störfalles auf die Rotorantriebswelle einzuwirken. Die Bremseinrichtung kann beispielsweise an der Verzahnung oder an einer anderen Stelle der Rotorantriebswelle oder an einem vor- oder nachgeschalteten, drehbar mit der Rotorantriebswelle verbundenen Element angeordnet sein, und, zentral am Antriebsstrang angreifend, die Rotation der Rotorantriebswelle bremsen, behindern, oder verhindern.

Gemäß einer weiteren vorteilhaften Ausgestaltung der Erfindung ist das Fluggerät nach Art einer Drohne oder nach Art eines Helikopters oder nach Art eines Multicopters ausgebildet.

Gemäß einer weiteren vorteilhaften Ausgestaltung der Erfindung trägt das Fluggerät eine Einrichtung zum Bewerkstelligen einer Funkverbindung, insbesondere eine Antenne und/oder elektronische Empfangs- oder Sendeeinrichtung. Hierzu kann auch vorgesehen sein, dass das Fluggerät nicht nur mit einer Spannungsversorgungsleitung mit der Bodenstation verbunden ist, sondern zusätzlich auch mit einer Datenleitung, insbesondere einer Glasfaserleitung, wie diese in der eingangs beschriebenen Patentanmeldung der Anmelderin beschrieben ist.

Gemäß einer weiteren vorteilhaften Ausgestaltung der Erfindung trägt das Fluggerät eine Einrichtung zur Bewerkstelligung eines Blitzschutzes für ein Veranstaltungsgelände. Hierzu wird zur Vermeidung von Wiederholungen ebenfalls auf die eingangs beschriebene Patentanmeldung der Anmelderin verwiesen.

Weitere Vorteile der Erfindung ergeben sich aus den nicht zitierten Unteransprüchen, sowie anhand der nachfolgenden Beschreibung der in den Zeichnungen dargestellten Ausführungsbeispielen. Darin zeigen:
- Fig. 1: in einer teilgeschnittenen schematischen blockschaltbildartigen Darstellung ein Ausführungsbeispiel eines erfindungsgemäßen Fluggerätes, welches über eine Spannungsversorgungsleitung mit einer Bodenstation verbunden ist, wobei das Fluggerät oberhalb eines Veranstaltungsgeländes angeordnet ist,
- Fig. 2: in einer vergrößerten teilgeschnittenen schematischen blockschaltbildartigen Darstellung einen bereichsweisen Ausschnitt aus dem Fluggerät der Fig. 1, etwa entlang der vergrößerten Teilkreisdarstellung II in Fig. 1, wobei Fig. 2 der Übersichtlichkeit halber ein Anschauungsbeispiel eines Fluggerätes des Standes der Technik darstellt,
- Fig. 3: in einer Darstellung vergleichbar der Darstellung der Fig. 2 ein Ausführungsbeispiel eines erfindungsgemäßen Fluggerätes unter Veranschaulichung eines Antriebs mit einer Mehrzahl von Elektromotoren zum Antrieb einer Rotorantriebswelle,
- Fig. 4: das Ausführungsbeispiel der Fig. 4 in einer teilgeschnittenen schematischen Prinzip-Ansicht etwa entlang Schnittlinie IV-IV in Fig. 3,
- Fig. 5: ein weiteres Ausführungsbeispiel eines erfindungsgemäßen, als Helikopter ausgebildeten Fluggerätes,
- Fig. 6: in einer teilgeschnittenen schematischen Draufsicht ein weiteres Ausführungsbeispiel eines erfindungsgemäßen Fluggerätes in einer schematischen Prinzipskizze, ähnlich der Fig. 4, wobei hier die Rotorantriebswelle nach Art eines Speichenrades ausgebildet ist und drei Elektromotoren über einen dreieckförmigen Träger miteinander verbunden sind,
- Fig. 7: eine vergrößerte Detaildarstellung des Ausführungsbeispiels der Fig. 6 in einer Darstellung etwa gemäß Teilkreis VII in Fig. 6, und
- Fig. 8: eine schematische teilgeschnittene Seitenansicht des Fluggerätes in einer Darstellung etwa gemäß Ansichtspfeil VIII in Fig. 7.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

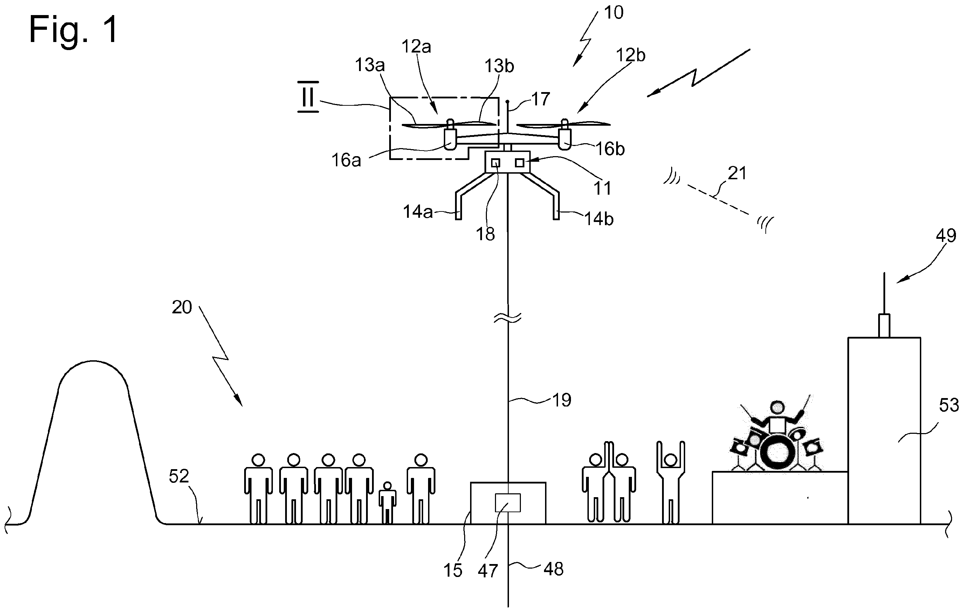

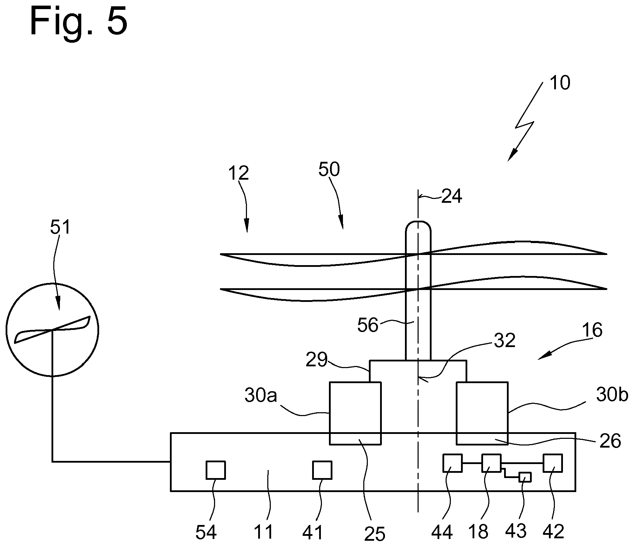

Die Erfindung wird nachfolgend anhand mehrerer Ausführungsbeispiele erläutert:
Ausweislich Fig. 1 ist ein erstes Ausführungsbeispiel eines erfindungsgemäßen Fluggerätes 10 in einer schematischen Prinzipskizze, nach Art eines Blockschaltbildes, dargestellt:
Das erfindungsgemäße Fluggerät 10 ist hier nach Art eines Multicopters ausgebildet und weist zwei Rotoren 12a, 12b auf, die an einer Karosserie 11 oder einem Trägergestell oder Träger 11 angeordnet sind. Der Begriff Multicopter macht deutlich, dass die Zahl der Rotoren 12a, 12b an dem Fluggerät 10 beliebig ist. Von der Erfindung sind Fluggeräte umfasst, die einen oder mehrere derartige Rotoren 12a, 12b aufweisen. Von der Erfindung sind auch, wie das Ausführungsbeispiel der Fig. 5 veranschaulicht, Fluggeräte 10 umfasst, die nach Art eines Helikopters ausgebildet sind, und beispielsweise einen Doppelrotor 50 mit einstellbarem Pitch, d. h. einstellbarer Neigung, aufweisen. Das Ausführungsbeispiel der Fig. 5 zeigt darüber hinaus auch noch einen weiteren Rotor in Form eines Seitenruders 51.

Das erfindungsgemäße Fluggerät 10 umfasst wenigstens einen Rotor 12, 12a, 12b, der für einen Auftrieb des Fluggerätes 10 sorgt. Der entsprechende Rotor kann ein oder mehrere Rotorblätter 13a, 13b aufweisen. Bei sämtlichen Ausführungsbeispielen der Zeichnungen weist der Rotor 12 zwei Rotorblätter 13a, 13b auf, wobei die Zahl der Rotorblätter beliebig ist.

Bei dem Ausführungsbeispiel der Fig. 1 weist das Fluggerät 10 zwei oder mehr Beine oder Füße 14a, 14b auf, die eine sichere Landung des Fluggerätes 10 auf dem Boden 52 ermöglichen. Derartige Füße 14 sind allerdings nicht zwingend erforderlich.

Ausweislich des Ausführungsbeispiels der Fig. 1 ist das Fluggerät 10 über ein Spannungsversorgungskabel 19 mit einer Bodenstation 15 verbunden. Bei diesem Ausführungsbeispiel ist das Fluggerät 10 über sehr lange Zeiträume betreibbar. Bei einem anderen Ausführungsbeispiel, z. B. gemäß Fig. 5, ist das Fluggerät mit einem Akku 41 oder einer Batterie versehen. Von der Erfindung sind auch Fluggeräte 10 umfasst, die sowohl einen Anschluss für eine Verbindung mit einem Spannungsversorgungskabel 19, als auch einen Anschluss für eine Batterie 41 aufweisen.

Bei dem Ausführungsbeispiel der Fig. 1 weist das Fluggerät 10 eine Steuerung 18 auf, die auf in Fig. 1 nicht dargestellte Weise mit zwei Antrieben 16a, 16b für die Rotoren 12a, 12b zusammenwirkt. Hier ist jedem Rotor 12a, 12b ein eigener Antrieb 16a, 16b zugeordnet. Von der Erfindung ist aber auch umfasst, wenn ein Antrieb 16 mehrere Rotoren 12a, 12b antreibt.

Bei dem Ausführungsbeispiel der Fig. 1 weist die Bodenstation 15 eine eigene Steuerung 47 auf, die mit der Steuerung 18 kooperieren kann. Bei anderen Ausführungsbeispielen ist die Steuerung 18 in dem Fluggerät 10 autark von der Bodenstation 15.

Um das Fluggerät 10 zu steuern, kann die Steuerung 18 entweder drahtgebunden oder drahtlos Steuerungssignale von einer nicht dargestellten Fernsteuerung empfangen, die insbesondere von einer Bedienperson steuerbar ist. So kann die Bedienperson beispielsweise eine bestimmte Flugposition einstellen, die sich z. B. exakt oder im wesentlichen oberhalb der Bodenstation 15 befindet. Das Fluggerät 10 kann eine Einrichtung 42 (vgl. Fig. 5) zur Positionswahrung aufweisen, mit der von dem Fluggerät 10 eine einmalig eingestellte Flugposition dauerhaft oder jedenfalls für einen vorgegebenen längeren Zeitraum eingehalten und bewahrt werden kann. Die Einrichtung 42 zur Positionshaltung oder Positionsbewahrung kann dabei mit Sensoren und geeigneten elektrischen und elektronischen Bauelementen zusammenwirken, um beispielsweise durch eine Lagekontrolle oder eine Neigungskontrolle Korrekturen an der aktuellen Flugposition vorzunehmen, und über die Steuerung 18 die Antriebe 16a, 16b so ansteuern, dass unter Zuhilfenahme der Rotoren 12a, 12b die Soll-Flugposition erreicht oder beibehalten wird.

Bei dem Ausführungsbeispiel der Fig. 1 ist das Fluggerät 10 oberhalb eines Veranstaltungsgeländes 20 angeordnet. Man erkennt schematisch dargestellt eine Reihe von Personen und einen Schlagzeuger, um eine Musikveranstaltung zu veranschaulichen. An einem schematisch dargestellten Gebäude 53 ist eine Gegenfunkstation 49 angeordnet, zu der über die Antenne 17 oder eine an dem Fluggerät 10 angeordnete und nicht dargestellte Sende- und /oder Empfangseinheit für Funksignale eine Funkstrecke 21 gebildet werden kann. Das erhaben, weit oberhalb des Geländes 20 angeordnete Fluggerät 10 kann durch seine erhabene Position besonders vorteilhaft eine unmittelbare, d. h. direkte, Hindernis- und Blockadefreie Funkstrecke 21 zu anderen Teilnehmern 49 eines Funknetzwerkes aufbauen.

In einem weiteren bzw. ggf. auch zusätzlichen oder alternativen Einsatzzweck kann das Fluggerät 10 über eine Blitzschutzeinrichtung 54 (vgl. Fig. 5) verfügen, mit der im Falle eines Blitzschlages auftretende hohe Ströme über die Leitung 19, an die Bodenstation 15 sowie über einen Erdleiter 48 in die Erde eingeleitet werden können, zu einem tiefgelegenen Spannungsübergabepunkt. In diesem Falle ist das Spannungsversorgungskabel 19 vorteilhaft zusätzlich mit einem Stromleiter ausgestattet, der hohe, im Falle eines Blitzschlages auftretende elektrische Ströme sicher weiterleiten kann.

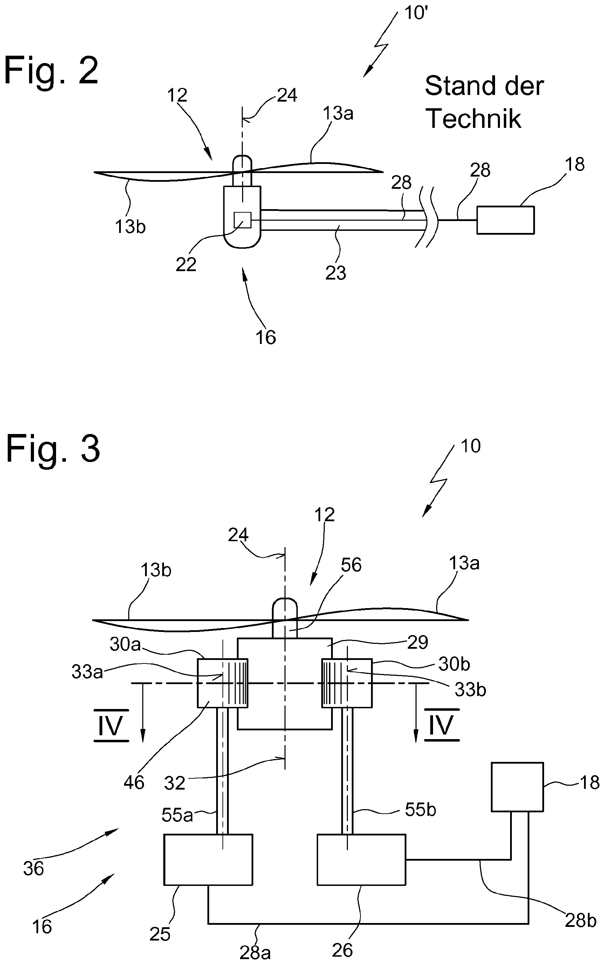

Ausweislich der Darstellung eines Fluggerätes 10' des Standes der Technik nach Fig. 2 soll zunächst dargelegt werden, dass das Fluggerät 10' des Standes der Technik über jeweils einen Rotor 12 über einen Antrieb 16 verfügte, der nur einen einzigen Elektromotor 22 aufweist. Der Elektromotor 22 war über eine Verbindungsleitung 28 mit der Steuerung 18 des Fluggerätes 10 verbunden.

Fig. 2 ist nur schematisch zu verstehen: Der Rotor 12 ist zusammen mit dem Antrieb 16 über eine mechanische Halterung 23 mit der in Fig. 2 nicht dargestellten Karosserie 11 oder dem Tragegestell 11 des Fluggerätes 10 verbunden.

Anhand des Ausführungsbeispiels der Fig. 3 soll nun ein erfindungsgemäßes Fluggerät 10 und sein Funktionsprinzip erläutert werden:
Hier ist der Antrieb 16 derart ausgestaltet, dass einem Rotor 12 zwei oder mehr voneinander unabhängige Elektromotoren 25, 26 zugeordnet sind. Die Elektromotoren 25, 26 sind über elektrische Steuer- sowie Verbindungsleitungen 28a, 28b mit der Steuerung 18 des Fluggerätes 10 verbunden.

Der erste Elektromotor 25 weist ein Ritzel 30a, also ein Zahnrad, auf, welches um eine Ritzelachse 33a drehbar ist. Der Elektromotor 25 ist über eine Ausgangswelle 55a mit dem Ritzel 30a verbunden.

Der Elektromotor 26 ist über eine Ausgangswelle 55b mit einem eigenen Ritzel 30b verbunden. Dieses ist um eine Ritzelachse 33b drehbar.

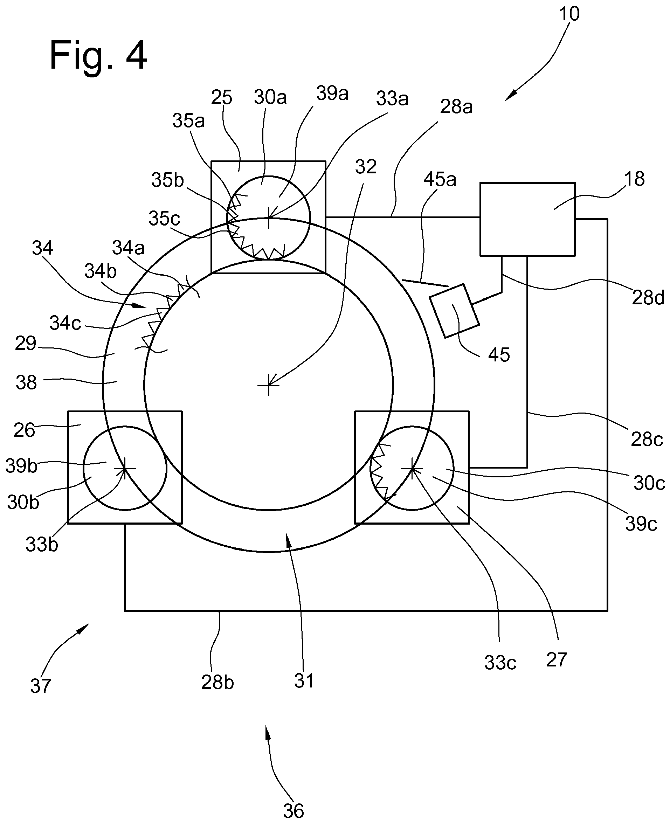

Ausweislich des Ausführungsbeispiels der Fig. 3 sind nur zwei Elektromotoren 25, 26 und zwei Ritzel 30a, 30b erkennbar. Tatsächlich zeigt Fig. 4, dass bei diesem Ausführungsbeispiel der Fig. 3 eine 120° versetzte, äquidistante Anordnung von drei Elektromotoren 25, 26, 27 und entsprechend drei Ritzeln 30a, 30b, 30c vorgesehen ist.

Jedes Ritzel 30a, 30b, 30c weist eine Außenverzahnung auf, beispielshaft veranschaulicht durch die Zähne 35a, 35b, 35c. Die Zähne 35a, 35b, 35c kämmen mit einer Verzahnung 34 an einer Rotorantriebswelle 29. Die Rotorantriebswelle 29 ist als Hohlwelle 31 ausgebildet, und weist eine Außenverzahnung 34 auf. Die Drehachse der Rotorantriebswelle 29 ist in den Figuren mit 32 bezeichnet. Bei sämtlichen Ausführungsbeispielen ist die Drehachse 32 der Rotorantriebswelle 29 identisch zu der Drehachse 24 des Rotors 12. Bei nicht dargestellten Ausführungsbeispielen der Erfindung können diese beiden Drehachsen 32, 24 aber auch auseinander fallen bzw. beliebig zueinander orientiert sein.

Bei sämtlichen Ausführungsbeispielen sind die Drehachsen 33a, 33b, 33c der Ritzel 30a, 30b, 30c parallel zu der Drehachse 32 der Rotorantriebswelle 29 angeordnet, aber zu dieser axial beabstandet.

Die Ritzel 30a, 30b, 30c des Ausführungsbeispiels der Fig. 4 gehen gleichläufig, d. h. im gleichen Drehsinne. Entsprechend wird die Rotorantriebswelle 29 im umgekehrten Drehsinne angetrieben.

Die Rotorantriebswelle 29 kann unmittelbar den Rotor 12 andrehen, ggf. unter Zwischenschaltung eines Verbindungsbolzens oder Verbindunsstückes 56. Vorteilhafterweise dreht der Rotor 12 mit gleicher Drehzahl, wie die Rotorantriebswelle 29. Bei anderen Ausführungsformen der Erfindung kann zwischen Antriebswelle 29 und Rotor 12 aber auch noch ein Übersetzungs- oder Untersetzungsgetriebe vorhanden sein.

Wie die Prinzipskizze der Fig. 4 deutlich macht, ist eine Planetengetriebeanordnung 37 vorgesehen:
Das zentrale, drehende Sonnenrad wird von der Rotorantriebswelle 29 gebildet.

Die drei Antriebsritzel 30a, 30b, 30c stellen die Planeten der Planetengetriebeanordnung 37 dar, wobei die Planeten 39a, 39b, 39c - anders, als bei herkömmlichen Planetengetrieben - ortsfest angeordnet sind. Die Rotorantriebswelle 29 stellt also die Sonne 38 des Planetengetriebes dar, und die Ritzel 30a, 30b, 30c die Planeten 39a, 39b, 39c.

Jeder der drei Elektromotoren 25, 26, 27 ist über eine Signal- oder Steuerleitung 28a, 28b, 28c mit der Steuerung 18 des Fluggerätes 10 verbunden. Vorteilhafterweise weisen die drei Elektromotoren 25, 26, 27 eine gleiche Leistung oder im wesentlichen gleiche Leistung auf, und/oder werden von der Steuerung 18 derartig angesprochen, dass sie zu gleichen Teilen oder etwa zu gleichen Teilen zu der Gesamtrotorantriebsleistung beitragen.

Bei dem Ausführungsbeispiel der Figuren 3 - 5 ist jeweils ein Antrieb 16 mit einer Mehrzahl von Elektromotoren 25, 26, 27 mit einem Rotor 24 verbunden. Von der Erfindung ist aber auch umfasst, wenn von einem Antrieb 16 mehrere Rotoren 12a, 12b angetrieben werden.

Gemäß der Erfindung kann die Rotorantriebsleistung, die für einen Betrieb des Fluggerätes 10 erforderlich oder gewünscht ist, auf mehrere Elektromotoren 25, 26, 27 aufgeteilt werden. Dabei ist die Zahl der Elektromotoren im Prinzip beliebig. Die Ausführungsbeispiele zeigen einen Antrieb 16 mit drei Elektromotoren 25, 26, 27, wobei aber alternativ auch zwei, vier, sechs bis zehn oder eine andere Anzahl von Elektromotoren denkbar und von der Erfindung umfasst sind.

Fällt einer der Elektromotoren aus, kann durch eine entsprechende Auslegung des Gesamtsystems und insbesondere in Kenntnis der erforderlichen Gesamtantriebsleistung für eine hohe Ausfallsicherheit gesorgt werden. Bei Leistungsausfall eines Elektromotors 25 können beispielsweise die verbleibenden Elektromotoren 26, 27 übernehmen.

Die einzelnen, im Unterschied zum Stand der Technik kleiner dimensionierten Elektromotoren 25, 26, 27 können gegenüber dem Stand der Technik mit einfachen Mitteln und besser gekühlt werden.

Ausweislich des Ausführungsbeispiels der Fig. 5 sind von der Erfindung auch Fluggeräte 10 umfasst, bei denen Rotoren 12 vorgesehen sind, die als Mehrfachrotor, z. B. wie Fig. 5 zeigt, als Doppelrotor ausgebildet sind. Von der Erfindung sind auch Fluggeräte gemäß Fig. 5 umfasst, die neben einem oder mehreren Rotoren 12, 12a, 12b auch noch Seitenruder 51 aufweisen. Die Rotorbewegung des Seitenruders 51 kann dabei von dem gleichen Antrieb 16 abgeleitet werden, der auch den Rotor 12, 50 antreibt. Von der Erfindung ist aber auch umfasst, wenn das Seitenruder 51 über einen eigenen Antrieb verfügt.

Die einzelnen Elektromotoren 25, 26, 27 sind über die gesonderten Signal- oder Steuerleitungen 28a, 28b, 28c unabhängig voneinander von der Steuerung 18 ansteuerbar.

Erkennt eine an dem Fluggerät 10 angeordnete Einrichtung 43 (vgl. Fig. 5) über eine entsprechende Detektion einen Ausfall eines der Elektromotoren 25, 26, 27 oder das Vorliegen eines Störfalls oder den Auftritt eines Verschleißanfalles, kann die Einrichtung 43 dies, ggf. unter Zuhilfenahme einer Einrichtung 44 zur Störungsmeldung, als Störung an die Steuerung 18 melden. Die Steuerung 18 kann sodann veranlassen, dass die bislang von dem ausgefallenen Elektromotor bereitgestellte Leistung unter Zurverfügungstellung entsprechender Leistung von den übrigen Elektromotoren aufgefangen wird.

Ausweislich des Ausführungsbeispiels der Fig. 4 soll angedeutet werden, dass das erfindungsgemäße Fluggerät 10 optional auch über eine Bremseinrichtung 45 verfügen kann. Ausweislich Fig. 4 weist die Bremseinrichtung 45 ein Bremselement 45a auf, welches mit der Rotorantriebswelle 29 im Sinne eines Bremsvorganges kooperieren kann. Die Bremseinrichtung 45 kann über eine Steuerleitung 28d mit der Steuerung 18 verbunden sein.

Für den Fall, dass das Fluggerät 10 beispielsweise komplett ausfällt, ist es aufgrund gesetzlicher Bestimmungen erforderlich oder zumindest wünschenswert, dass in dem Moment, in dem das Fluggerät 10 auf dem Boden auftrifft, keinerlei drehende oder rotierende Teile mehr aufweist, die Personen oder Tiere verletzen oder Gegenstände beschädigen können. Tritt ein solcher Notfall auf, kann die Steuerung 18 veranlassen, dass das Bremselement 45a aus der in Fig. 4 dargestellten Ruheposition in eine nicht dargestellte Arbeitsposition verlagert wird, beispielsweise unter Zuhilfenahme eines motorischen Antriebs, um die Drehbewegung der Rotorantriebswelle 29 um ihre Drehachse 32 schnell und effizient - und dies zentral - zu sperren, z. B. durch Reibschluss.

Ausweislich des Ausführungsbeispiels der Fig. 3 soll des weiteren erläutert werden, dass das Fluggerät 10 optional mit einer Freilaufeinrichtung 46 ausgestattet sein kann. Die Freilaufeinrichtung 46 kann beispielsweise in dem Verbindungsbereich zwischen einem Elektromotor 25 und dem Ritzel 30a, z. B. insbesondere dem Verbindungsbereich zwischen Ausgangswelle 55 und Ritzel 30a, angeordnet sein. Gleichermaßen kann eine entsprechende Freilaufeinrichtung 46 auch an jedem anderen Ritzel 30b, 30c vorgesehen sein.

Die Freilaufeinrichtung 46 dient dazu, bei einem Ausfall eines Elektromotors 25 dafür zu sorgen, dass die übrigen Elektromotoren 26, 27 durch Rotationsbewegungen ihren Ritzel 30b, 30c die Rotorantriebswelle 29 weiterhin im Antriebssinne antreiben können, das Ritzel 30a aber nicht blockiert und dieser Drehbewegung des Rotorantriebswelle 29 auch nicht entgegensteht, sondern hier einen Freilauf ermöglicht. Diese Freilaufkupplungen sind aus anderen Technikbereichen hinreichend bekannt, so dass auf deren detaillierte Beschreibung verzichtet wird.

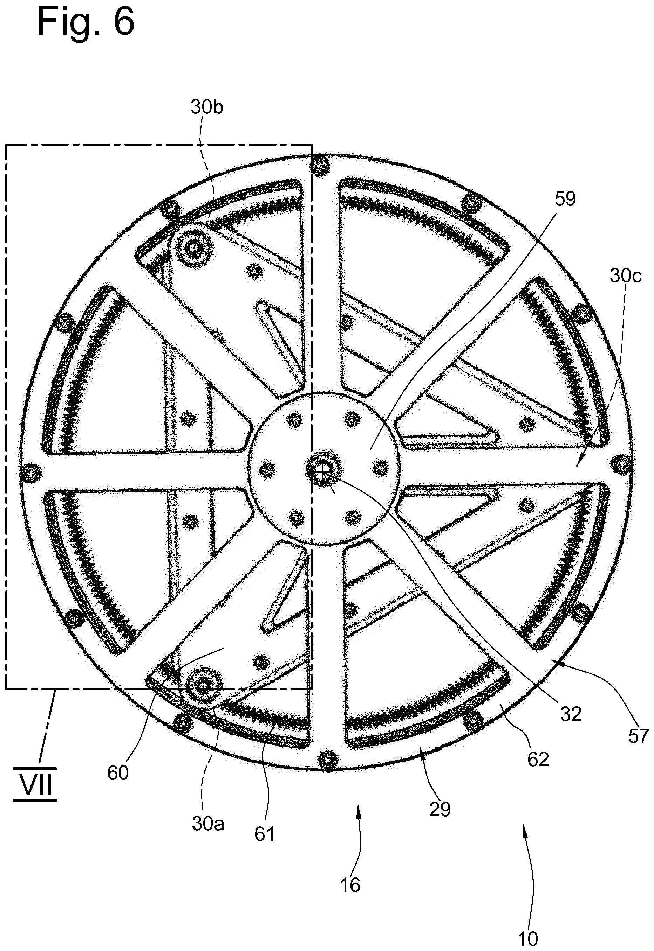

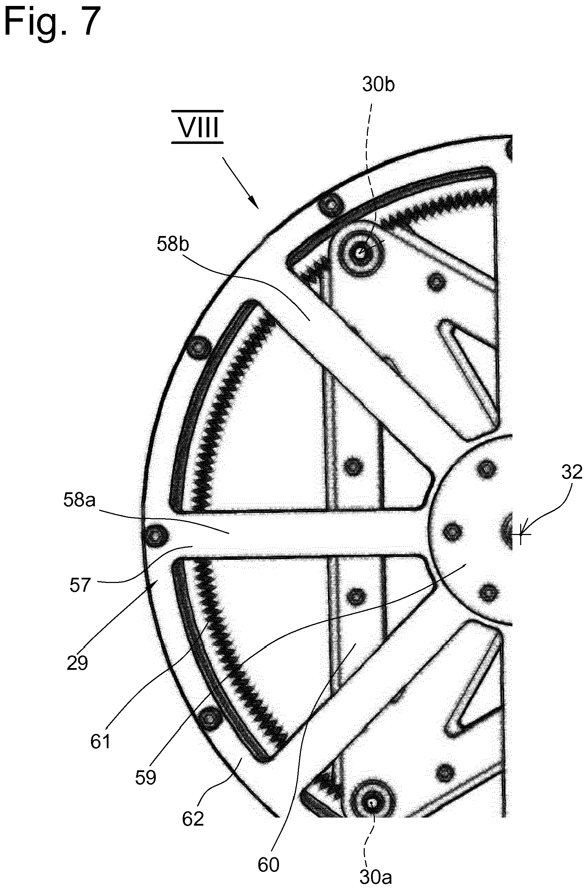

Ausweislich des Ausführungsbeispiels der Figuren 6 bis 8 wird nun eine alternative Ausgestaltung eines Antriebs 16 eines erfindungsgemäßen Fluggerätes 10 beschrieben, wobei die wesentlichen Elemente des Fluggerätes - ähnlich, wie in der Darstellung gemäß Fig. 4 - weggelassen sind.

Fig. 6 zeigt den Antrieb 16 in einer perspektivischen Blickrichtung ähnlich der Fig. 4. In Fig. 6 sind allerdings mehrere konstruktive Details erkennbar:
Die Rotorantriebswelle 29 ist bei dem Ausführungsbeispiel der Figuren 6 bis 8 von einem Speichenrad 57 gebildet, bzw. umfasst ein solches. Dieses weist ausgehend von einem radialen Zentrum eine Vielzahl von Speichen 58a, 58b auf, die das Zentrum mit einer außenliegenden Felge 62 verbinden.

An der Felge 62 ist eine Innenverzahnung 61 angeordnet, die vollständig umlaufend ausgebildet ist und eine Vielzahl von Zähnen aufweist.

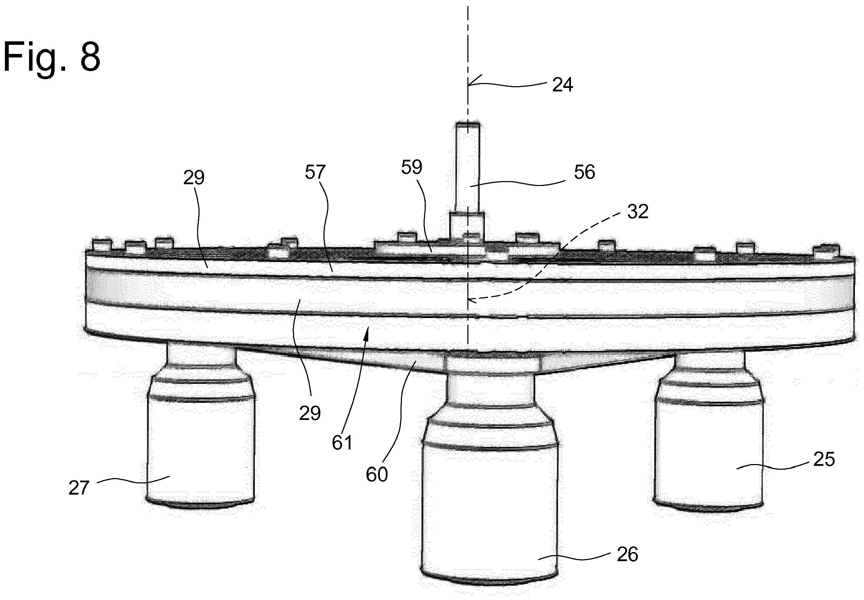

Wiederum sind drei Elektromotoren 25, 26, 27 vorgesehen, die am besten in Fig. 8 erkennbar sind. Jedem Elektromotor 25, 26, 27 ist ein Ritzel 30a, 30b, 30c zugeordnet, das auf nicht dargestellte Weise mit entsprechenden Zähnen der Innenverzahnung 61 kooperiert.

Die drei Ritzel 30a, 30b, 30c sind unter Zuhilfenahme eines dreieckförmigen Trägerelementes 60 fest miteinander verbunden bzw. fest relativ zueinander positioniert. Hierdurch erhält der Antrieb 16 bei geringem Gewicht eine stabile Bauweise.

Die hier als Speichenrad 57 ausgebildete Rotorantriebswelle 29 ist mit einem Flanschanschluss 59 ausgestattet, an dem der Verbindungsbolzen 56, wie in Fig. 8 erkennbar, angreift. Oberhalb des in Fig. 8 dargestellten Verbindungsbolzens 56 findet sich der - nicht dargestellte - mit der Rotorantriebswelle 59 drehschlüssig verbundene Rotor 12.

Die Rotorachse 24 entspricht bei dem Ausführungsbeispiel der Fig. 6 bis 8 wiederum der Drehachse 32 der Rotorantriebswelle 29.

## Patentansprüche

1. Fluggerät (10), umfassend wenigstens einen Auftriebskräfte generierenden Rotor (12, 12a, 12b), der unter Zuhilfenahme einer Steuerung (18) von einem Antrieb (16, 16a, 16b) ansprechbar ist, wobei der Antrieb (16, 16a,16b) eine elektromotorisch angetriebene Rotorantriebswelle (29) aufweist, **dadurch gekennzeichnet, dass** der Antrieb (16, 16a, 16b) eine Mehrzahl von Elektromotoren (25, 26, 27) aufweist, die die Rotorantriebswelle (29) gemeinsam antreiben.

2. Fluggerät nach Anspruch 1, **dadurch gekennzeichnet, dass** die Rotorantriebswelle (29) mittelbar oder unmittelbar mit dem Rotor (12, 12a, 12b) verbunden ist.

3. Fluggerät nach Anspruch 1 oder 2, **dadurch gekennzeichnet, dass** eine Drehzahl der Rotorantriebswelle (29) einer Drehzahl des Rotors (12, 12a, 12b) entspricht oder proportional zu der Drehzahl des Rotors ist.

4. Fluggerät nach einem der vorangegangenen Ansprüche, **dadurch gekennzeichnet, dass** die Rotorantriebswelle (29) nach Art einer Hohlwelle (31, 57) ausgebildet ist.

5. Fluggerät nach einem der vorangegangenen Ansprüche, **dadurch gekennzeichnet, dass** die Rotorantriebswelle (29) auf ihrem Außenumfang mit einer Verzahnung (34) versehen ist oder eine Innenverzahnung (61) aufweist.

6. Fluggerät nach einem der vorangegangenen Ansprüche, **dadurch gekennzeichnet, dass** die Mehrzahl der Elektromotoren (25, 26, 27) in einander gegenüberliegender Anordnung um eine Drehachse (32) der Rotorantriebswelle (29) herum angeordnet sind.

7. Fluggerät nach einem der vorangegangenen Ansprüche, **dadurch gekennzeichnet, dass** die Mehrzahl der Elektromotoren (25, 26, 27) und/oder die Mehrzahl der den Elektromotoren zugeordneten Ritzel (30a, 30b, 30c) in äquidistanter Anordnung um eine Drehachse (32) der Rotorantriebswelle (29) herum angeordnet sind.

8. Fluggerät nach einem der vorangegangenen Ansprüche, **dadurch gekennzeichnet, dass** die Mehrzahl der Elektromotoren (25, 26, 27) und/oder deren Ritzel (30a, 30b, 30c) mit gleicher Drehzahl dreht.

9. Fluggerät nach Anspruch 5, **dadurch gekennzeichnet, dass** der Mehrzahl von Elektromotoren (25, 26, 27) jeweils ein Ritzel (30a, 30b, 30c) zugeordnet ist, welches mit der Verzahnung (34, 61) kämmt.

10. Fluggerät nach Anspruch 9, **dadurch gekennzeichnet, dass** dem jeweiligen Ritzel (30a, 30b, 30c) eine Freilaufeinrichtung (46) zugeordnet ist, die bei Ausfall eines Elektromotors einen Freilauf des Ritzels zulässt.

11. Fluggerät nach Anspruch 9 oder 10, **dadurch gekennzeichnet, dass** die Rotorantriebswelle (29) nach Art eines drehenden Sonnenrades eines Planetengetriebes (37) ausgebildet ist, wobei die Ritzel (30a, 30b, 30c) der Mehrzahl von Elektromotoren (25, 26, 27) nach Art von ortsfest ausgebildeten Planeten (39a, 39b, 39c) des Planetengetriebes (37) angeordnet sind.

12. Fluggerät nach einem der vorangegangenen Ansprüche, **dadurch gekennzeichnet, dass** das Fluggerät (10) seine Betriebsspannung von einem an dem Fluggerät (10) angeordneten Akku (42) erhält.

13. Fluggerät nach einem der Ansprüche 1 bis 11, **dadurch gekennzeichnet, dass** das Fluggerät (10) seine Betriebsspannung von einer Bodenstation (15) erhält, mit der es im Flugbetrieb über ein Spannungsversorgungskabel (19) verbunden ist.

14. Fluggerät nach einem der vorangegangenen Ansprüche, **dadurch gekennzeichnet, dass** die Steuerung (47) eine Einrichtung (42) umfasst, mit der das Fluggerät (10) eine eingestellte Flugposition dauerhaft bewahren kann.

15. Fluggerät nach einem der vorangegangenen Ansprüche, **dadurch gekennzeichnet, dass** die Mehrzahl von Elektromotoren (25, 26, 27) jeweils eine gleiche oder im wesentliche gleiche Leistung besitzen.
